# EUROPÄISCHE PATENTANMELDUNG

(11) **EP 1 380 514 A1**
(43) Veröffentlichungstag der Anmeldung: **14.01.2004**
(21) Anmeldenummer: 02015397.9
(22) Anmeldetag: 11.07.2002
(51) Int. Cl.: B65D 35/02, B29C 63/42, B65C 3/06

(54) **Dekoration eines verformbaren Behälters**

(71) Anmelder: Novocan AG, 8604 Volketswil (CH)
(72) Erfinder: Hagmann, Jakob, 8954 Geroldswil (CH)
(74) Vertreter: Hepp, Dieter

(57) **Zusammenfassung**

Behälter mit einer verformbaren Behälterwand, insbesondere eine Tube (1) mit einer dekortragenden Schicht (7), wobei die dekortragende Schicht eine thermisch auf den Behälter geschrumpfte Folie aufweist und die thermisch geschrumpfte Folie durch einen Klebstoff auf der Behälterwand fixiert ist. Weiterhin wird ein Verfahren zur Dekoration eines Behälters mit einer verformbaren Behälterwand beschrieben, bei dem ein thermisch schrumpfbares Material und ein Klebstoff auf die Behälterwand aufgebracht werden.

## Beschreibung

Die Erfindung betrifft ein Verfahren zur Dekoration eines verformbaren Behälters, insbesondere einer Tube, einen verformbaren Behälter mit einer dekortragenden Schicht sowie die Verwendung eines thermisch schrumpfbaren Materials zur Dekoration eines verformbaren Behälters unter Anwendung eines thermisch aktivierbaren Klebstoffes.

Verformbare Behälter wie etwa Metall- oder Kunststofftuben, Kunststoffbeutel etc. werden weit verbreitet in unterschiedlichsten Anwendungsbereichen eingesetzt. Beispielsweise werden verformbare Behälter zur leichten und auch portionsweisen Ausgabe von Produkten im Pharmakabereich (beispielsweise Salben, viskose Flüssigkeiten), im Lebensmittelbereich (wie Senf, Mayonnaise, Sossen etc.), im Haushaltsbereich (Reinigungsmittel, Schuhcreme, Poliermittel etc.) oder in technischen Bereichen (für Schmiermittel, Farben, Klebstoffe etc.) eingesetzt. Die Ausgabe wird in der Regel durch Ausübung von Druck auf den Behälter hervorgerufen.

Auf der Oberfläche dieser verformbaren Behälter sind regelmässig Informationen sowohl für die Kennzeichnung wie auch für die Vermarktung der im Behälter enthaltenen Produkte aufgebracht. Bislang wurden diese Informationen mittels Druckverfahren auf den verformbaren Behälter gedruckt. Die Informationen müssen erkennbar bleiben, auch wenn der Behälter verformt wird. Vor allem Farbdruck (Werbe-Drucke) ist aufwendig. Es müssen entweder die verschiedenen Farben aufeinanderfolgend auf die Oberfläche gedruckt werden oder es wird mittels eines Übertragungsmediums, das dann das aus allen Farbkomponenten zusammengesetzte Bild enthält, auf die Oberfläche des verformbaren Behälters gedruckt.
Diese Vorgehensweise ist technisch aufwendig, da der zu bedruckende Behälter genau ausgerichtet werden muss, um die verschiedenen Farben konturgenau übereinander zu drucken. Tritt im Durckvorgang eines Farbbereiches eine Störung auf, so ist der gesamte Bedruckungsvorgang unterbrochen und verursacht Ausschuss-Produkte. Auch die Umstellung der Druckstrasse auf ein anderes Bedruckungsmuster oder auf eine andere Behältergrösse erfordert jeweils eine längere Umstellungsphase. Daher ist es aus wirtschaftlichen Gründen notwendig, eine grosse Anzahl an Behältern zu bedrucken, ehe eine Umstellung vorgenommen wird. Dies erfordert eine aufwendige Lagerhaltung bedruckter Behälter.

Bei anderen Verpackung wie beispielsweise Kunststoffflaschen oder Aerosoldosen ist es bekannt, die notwendigen Informationen auf eine Schicht , z.B. einer Etikette oder Banderole aufzubringen und diese Schicht anschliessend auf der Dose oder Flasche anzubringen. Eine derartig mit einem Schrumpfschlauch beschichtete Aerosol-Dose wird in EP 1201331 beschrieben. Dosen und Flaschen werden jedoch nicht während der Ausgabe des Inhaltes deformiert. Die zeichen- oder dekortragende Schicht haftet auf diesen Behältern nur aufgrund der physikalischen Schrumpf-Kräfte.

Bei verformbaren Behältern, vor allem bei Tuben können deshalb Etiketten und Schrumpfschläuche nicht verwendet werden. Die Beschichtung würde sich bei einer temporären oder dauerhaften Verformung des Behälters teilweise oder vollständig von der Oberfläche lösen. Die Beschichtung weist bereits bei teilweiser Ablösung eine Blasenbildung auf, die unter anderem durch Einschluss von Luft hervorgerufen wird. Ein derartiges Erscheinungsbild ist wenig ästhetisch und unter Marketingaspekten nicht brauchbar. Schrumpf-Folien sind an sich sehr vorteilhaft, weil sie einfach durch Wärmezufuhr aufgrund der Schrumpf-Kräfte haften. Für Tuben und andere deformierbare Behälter werden sie als ungeeignet eingestuft.

Die Aufgabe der vorliegenden Erfindung ist es einen verformbaren Behälter und ein Verfahren zur Dekoration eines verformbaren Behälters bereitzustellen, bei dem die eine Dekoration tragende Schicht einfach und auch bei Verformung dauerhaft angebracht werden kann. Die Beschichtung soll auch nach Verformung ein ästhetisches und vermarktungstaugliches Aussehen behalten.

Diese Aufgaben werden mit den kennzeichenden Merkmalen der unabhängigen Ansprüche gelöst.

Ein erfindungsgemässer Behälter mit einer verformbaren Behälterwand, insbesondere eine Tube, umfasst eine dekortragende Schicht, wobei die dekortragende Schicht ein Material, insbesondere eine Folie aufweist, welche thermisch auf den Behälter aufgeschrumpft ist, und wobei dieses thermisch geschrumpfte Material durch einen Klebstoff, vorzugsweise vollflächig auf der Behälterwand fixiert ist.

Unter einem Behälter mit einer verformbaren Behälterwand ist ein Behälter zu verstehen, der aus einem duktilen und/oder flexiblen Material oder einer flexiblen Materialmischung aufgebaut ist. Das Behältermaterial ist in der Lage, infolge äusserer Einwirkungen seine Form zu verändern. Es sind hierbei zwei unterschiedliche Typen von Formveränderungen zu berücksichtigen. Einerseits kann die Formveränderung in einer dauerhaften Verformung des Behälters beruhen, d.h. die Verformung des Behälters bleibt erhalten, andererseits kann der Behälter aber auch aufgrund der elastischen Eigenschaften des Behältermaterials nach der Verformung wieder seine Ursprungsform annehmen. Das Behälter-Material kann Metall oder eine Metallegierung, ein Kunststoff oder ein Material-Laminat verschiedenster, geeigneter Materialkombinationen sein. Bevorzugte Behälter sind solche, die eine dauerhafte Veränderung der äusseren, geometrischen Form des Behälters aufweisen, d.h. irreversibel verformbar sind.

Ein thermisch schrumpfbares Material, insbesondere eine thermisch schrumpfbare Folie zeichnet sich durch eine Verringerung seiner Längenausdehnung nach bzw. bei Wärmezufuhr aus. Die Wärmezufuhr bewirkt eine Veränderung der räumlichen Orientierung und Ausdehnung der einzelnen (Polymer-)Moleküle sowie eine Veränderung der relativen Orientierung der Polymermoleküle zueinander. Als (Polymer-)Moleküle sind diejenigen Verbindungen zu verstehen, aus denen das thermisch schrumpfbare Material bilden. Eine thermisch schrumpfbare Folie liegt meist als dünnes Flächengebilde vor. Derartige Folien bestehen beispielsweise aus Polyethylenterephthalat (PET), Hart-Polyvinylchlorid (PVC) oder orientiertes Polystyrol (OPS). Derartige Materialien lassen sich in einem Temperaturbereich zwischen 25° und 150°C schrumpfen. Vorteilhaft weist die thermisch schrumpfbare Folie eine Stärke von 30 bis 120 µm auf.

Vorzugsweise ist der Klebstoff, mit dem die thermisch schrumpfbare Folie an die Behälterwand fixiert wird, ein thermoplastischer Klebstoff, insbesondere ein Schmelzklebstoff wie er in Römpp, Chemie-Lexikon, Band 5, 9. Auflage 1992, Seite 4037 definiert wird. Ein thermoplastischer Klebstoff zeichnet sich durch die Eigenschaft aus, bei Erreichen eines Temperaturbereichs zu erweichen bzw. zu verflüssigen und eine Klebewirkung zu erlangen. Beim Abkühlen erhärtet der Klebstoff wieder und es entsteht eine auf physikalischen Kräften beruhende dauerhafte Verbindung der zu verklebenden Teile. Bei der Anwendung des Klebstoffes ist bekannterweise auf die Eigenschaften, insbesondere der Temperaturstabilität der zu verbindenden Materialien zu achten. Der Temperaturbereich ist dem entsprechend geeignet auszuwählen und beeinflusst in gewissem Umfang damit die Wahl des Klebstoffs bzw. dessen Komponenten. Weiter vorteilhaft kann ein Schmelzkleber eingesetzt werden, der zusätzlich passivierte reaktive Gruppen enthält, welche beim Erweichen bzw. Schmelzen aktiviert werden. Diese aktivierten Gruppen ergeben eine zusätzliche Verstärkung der Haftwirkung der Folie auf dem Behälter. Ausserdem wird durch die Aktivierung ein Polymerisations-Vorgang ausgelöst, der dauerhafte Härtung des Klebstoffs bewirkt. Derartige Klebstoffe sind dem Fachmann bekannt.

Ebenfalls geeignet ist ein Klebstoff, der thermisch aktivierbar ist. Unter einem thermisch aktivierbaren Klebstoff ist ist gemäss Römpp, Chemie-Lexikon, Band 5, 9. Auflage 1992, Seite 3801 "Reaktivklebstoffe" ein Klebstoff zu verstehen, bei dem durch eine Wärmezufuhr eine Vernetzung bzw. Polymerisation der Klebstoffmoleküle ausgelöst wird. Dies ist auf ein Aktivieren von reaktiven Gruppen des Klebstoffes zurückzuführen, beispielsweise durch die Abspaltung von etwaigen Schutzgruppen. Die reaktiven Gruppen können dabei einer Reihe von Polymerisationsreaktionen zugänglich sein. Durch diese Vorgänge härtet der Klebstoff aus und stellt eine dauerhafte Verbindung zwischen der Behälterwand und dem thermisch geschrumpften Material her.

Der Schrumpfvorgang der Folie bewirkt das Anpressen der Folie an die Behälterwand und die Fixierung der Klebeflächen bis zum Aushärten des Klebstoffs. Danach wird eine Haftung der Folie sowohl durch die Anpresskraft als auch durch die Klebstoffschicht gewährleistet.

Bei einer Deformierung des Behälters liegt das thermisch geschrumpfte Material, insbesondere die thermisch geschrumpfte Folie erfindungsgemäss weiterhin an der Oberfläche des Behälter an, da der Klebstoff eine Wechselwirkung zwischen der geschrumpften Folie und der Oberfläche des Behälters herstellt. Dies ist besonders bei einer vollflächigen Auftragen des Klebstoffs auf die Behälterwand der Fall. Durch die Befestigung der Materialschicht auf der Behälteroberfläche sind die möglicherweise aufgebrachte Informationen weiterhin gut und eindeutig erkennbar.

Vorteilhafterweise wird das thermisch schrumpfbare Material, insbesondere eine Folie vor dem Schrumpfvorgang mit einem Dekor bedruckt. Das Bedrucken der Schrumpffolie ist technisch einfacher durchzuführen als das Bedrucken des auf dem Behälter aufgebrachten Materials. Zugleich kann das Bedrucken der thermisch schrumpfbaren Folie getrennt vom eigentlichen Aufbringen auf den verformbaren Behälter erfolgen, gegebenenfalls sogar beim Hersteller der Schrumpffolie oder in einer Druckerei. Vorzugsweise wird die Bedruckung auf diejenige Seite der Folie aufgebracht, welche später an der Behälterwand anliegt. Damit wird die Bedruckung durch die Folie vor eventuellen Beschädigungen schützbar. Da das bedruckte Material unabhängig von den verformbaren Behälters herstellbar ist, kann die Herstellung des dekorierten Behälters kurzfristig auf den entsprechenden Bedarf ausgerichtet werden, ohne eine umfangreiche Lagerhaltung erforderlich zu machen. Zudem sind auch kleinere Mengen an dekorierten verformbaren Behältern ohne aufwendige Umstellung der Maschinen herstellbar.

Weiterhin vorteilhaft liegt das thermisch schrumpfbare Material, vorzugsweise die Folie in Form eines Schlauches vor. Ein derartiger Schlauch lässt sich beispielweise durch Extrusion des Materials herstellen. Der Schlauch kann aber auch durch das Verkleben eines bandförmigen Streifen des Materials erzeugt werden. Vorzugsweise werden dabei die Seitenkanten des Bandes miteinander verklebt. Der hierfür eingesetzte Klebstoff darf allerdings möglichst keine negativen Auswirkungen auf die Schrumpffähigkeit des Materials besitzen. Die Verwendung eines bandförmigen Ausgangsmaterials erleichtert das Aufbringen eines Druckmusters mittels bekannten Druckverfahren und erlaubt eine kostengünstige Herstellung eines bedruckten Materialschlauchs.

Ein Aspekt des thermisch schrumpfbaren Materials ist dessen Schrumpfverhalten in verschiedenen Richtungen. Dieses Schrumpfen muss bzw. darf nicht in allen Richtungen gleichmässig erfolgen. Durch eine Vorbehandlung des thermisch schrumpfbaren Materials ist es möglich, eine Kontraktion des Materials in einer Richtung auf einen kleinen Wertebereich, beispielsweise bis 10% Längsschrumpfung, einzustellen, während in radialer Richtung gleichzeitig eine Schrumpfung bis über 70% erzielt werden kann.

Ein weiterer Aspekt des erfindungsgemässen verformbaren Behälters ist ein Klebstoff, dessen Erweichen in einem Temperaturbereich zwischen 60° und 150°C erfolgt. Bevorzugt ist ein Temperaturbereich zwischen 80° und 130°C. Dieser Temperaturbereich erlaubt das Erweichen des Klebstoffes ohne negative Auswirkungen auf das Material der thermisch schrumpfbaren Dekorschicht sowie dem Material des verformbaren Behälters zu verursachen. Sofern der Klebstoff unterhalb des spezifischen Temperaturbereichs gelagert wird oder ein mit dem Klebstoff beschichtetes Substrat unterhalb dieses Temperaturbereiches bearbeitet wird, ist keine Klebewirkung vorhanden. Besonders vorteilhaft ist es, wenn die Schrumpftemperatur der thermisch schrumpfbaren Folie und die "Klebe"-Temperatur des Klebstoffes derart im gleichen Bereich liegt, dass gleichzeitig geschrumpft und geklebt werden kann.

Vorteilhafterweise wird der Klebstoff in Form einer Lösung oder Suspension auf dem Behälter, insbesondere die Behälterwand aufgebracht. Die Verwendung einer Klebstofflösung bzw. - suspension erlaubt ein einfaches Dosieren der erforderlichen Menge an Klebstoff sowie einen möglichst gleichmässigen Auftrag auf die Behälter-Oberfläche. Vorzugsweise bewegt sich die Dicker einer aufgetragenen Klebstoffschicht im µm-Bereich. Weiterhin kann die Klebstofflösung bzw. Suspension weitere Komponenten wie etwa Pigmente enthalten. Dies erlaubt zusätzlich die Möglichkeit einer Art von bedarfsbezogener Grundierung des Behälters. Vorstellbar ist aber auch, anstatt den Klebstoff als eigene Schicht auf den Behälter aufzubringen, diesen in eine Beschichtungszusammensetzung wie etwa einen Lack einzuarbeiten und den Klebstoff somit bei der Lackierung des Behälters aufzubringen. Ein derartiges Vorgehen bietet die Möglichkeit, die Behälter soweit vorzubereiten und zwischenzulagern, ehe je nach Bedarf einzig noch die thermisch schrumpfbare Folie bereitgestellt und aufgeschrumpft bzw. gleichzeitig verklebt wird. Ebenfalls vorstellbar ist es, den Klebstoff auf die Folie aufzubringen. Der Klebstoff kann mit verschiedenen Techniken auf das zu behandelnde Substrat aufgebracht werden, beispielsweise durch Sprühen, durch Walzen, mittels Pinsel oder Schwamm.

Vorzugsweise ist der verformbare Behälter aus einem metallischen Material, vorzugsweise aus Aluminium, einer Metall- bzw. Aluminiumlegierung oder einem Laminat-Werkstoff hergestellt. Die Verwendung von Metall bzw. einer Metallegierung als Behältermaterial ermöglicht ein Aufschrumpfen des thermisch schrumpfbaren Materials und die Verwendung eines Klebstoffes in einem höheren sowie breiteren Temperaturbereich. Höhere Temperaturen sowie ein breiterer Temperaturbereich eröffnen eine bessere Anpassung der Materialien aneinander und eine bessere Stabilität der Klebeverbindung zwischen dem Behälter und der Beschichtung. Der Einsatz eines Laminat-Werkstoffes, d.h. eines Mehrschichtsystems aus verschiedenen Materialien wie Metall, Kunststoff, Papier etc., kann von Vorteil sein, wenn beispielsweise der Behälterinhalt bestimmte Anforderungen, z.B. eine ungenügende Verträglichkeit aufweist, die nicht mit Metallen oder Metallegierungen vereinbart werden können.

Weiterhin vorteilhaft weist ein erfindungsgemässer Behälter, insbesondere eine Tube eine Verschlusskappe auf, welche die geschrumpfte Folie im Bereich der Ausgabeöffnung überdeckt. Die Länge des schrumpfbares Materialabschnittes wird beim Aufbringen auf den verformbaren Behälter meist so wählt, dass die Folie bis an die Ausgabeöffnung heranreicht. Dies ermöglicht einen sauberen Übergang vom weiten Querschnitt des Tubenkörpers auf den kleinen Querschnitt an der Ausgabeöffnung. Allerdings schrumpft das thermisch schrumpfbare Material im Bereich hin zur Ausgabeöffnung bzw. um die Ausgabeöffnung herum sehr viel stärker und neigt zur Faltenbildung. Diese Folienanhäufung ist jedoch wenig ästhetisch und vermarktungsfreundlich. Durch eine entsprechend ausgestaltete Verschlusskappe wird dieser Bereich um die Ausgabeöffnung überdeckt. Entsprechende Verschlusskappen, insbesondere auch Verschlusskappen mit einer Garantiefunktion sind dem Fachmann bekannt. Anstatt einer solchen breiten Verschlusskappe kann auch eine Abdeckscheibe zur Überdeckung der Folienanhäufung verwendet werden. Die Ausgabeöffnung lässt dann mit einem kleinen Verschlussstück schliessen. Eine Kombination von Abdeckscheibe und einer Verschlusskappe, insbesondere einer breiten Verschlusskappe ist auch vorstellbar.

Das erfindungsgemässe Verfahren zur Dekoration eines Behälters mit einer verformbaren Behälterwand enthält die Schritte des Bereitstellen eines Behälters mit einer verformbaren Behälterwand, das Bereitstellen eines thermisch schrumpfbaren Materials, einem Bereitstellen eines vorzugsweise thermoplastischen Klebstoffs zum Aufkleben des geschrumpften Materials auf die Behälterwand und einem kontinuierlichen Aufschrumpfen des thermisch schrumpfbaren Materials auf den verformbaren Behälter unter Wärmezufuhr. Die Wärmezufuhr bewirkt eine dauerhafte Adhesion des thermisch schrumpfbaren Materials an der verformbaren Behälterwand durch den Schrumpfprozess und durch den thermoplastischen Klebstoff. Bevorzugt ist das thermisch schrumpfbare Material eine Folie.

Vorteilhafterweise erfolgt die Zuführung der Wärme zuerst zu einem der Endbereich der Tube. Unter einem Endbereich ist entweder die Einfüllöffnung oder die Ausgabeöffnung der Tube zu verstehen. Die thermisch schrumpfbare Folie wird damit am verformbaren Behälter fixiert, was ein optimiertes Anbringen der Folie auf der verbleibenden Behälterwand ermöglicht. Die Einfüllöffnung ist dabei die der Ausgabeöffnung des Behälter gegenüberliegenden Öffnung. Durch die Einfüllöffnung wird der Tubeninhalt eingefüllt und die Tube anschliessend verschlossen. Unter der Ausgabeöffnung ist diejenige Öffnung zu verstehen, die zur gebrauchsmässigen Abgabe des Behälterinhalts vorgesehen ist. Mit einer kontinuierlichen Führung der Wärmezufuhr entlang der Längsachse des Behälter hin zu dessen Ausgabeöffnung bzw. mit dem kontinuierlichen Einlaufen des Behälters in eine Heiz-Zone wird das noch nicht geschrumpfte Material an den Behälter fortlaufend und kontrolliert an die Behälter-Aussenfläche angeschrumpft. Dieses fortlaufende Anschrumpfen an den Behälter ermöglich eine weitgehende Vermeidung von nachteiligen Lufteinschlüssen zwischen der Behälter-Aussenfläche und dem aufgeschrumpften Materialschlauch. Ein analoges Vorgehen wie vorgehend beschrieben, allerdings mit dem Beginn des Schrumpfvorgang im Bereich der Ausgabeöffnung, ist ebenfalls vorstellbar. Mit dem entweder gleichzeitig oder getrennt davon erfolgenden Erweichen bzw. Schmelzen oder der thermischen Aktivierung des Klebstoffs wird eine dauerhafte und stabile Verbindung der thermisch schrumpfbaren Folie mit der Aussenfläche des verformbaren Behälters hergestellt.

Ein weiterer Aspekt der Erfindung betrifft einen Tuben-Rohling, der mit einem Klebstoff flächig vorbeschichtet ist, zur Herstellung einer erfindungsgemäss dekortragenden Tube. Der aufgetragene Klebstoff schmilzt bei Zufuhr von Wärme und/oder ist durch die Wärmezufuhr thermisch aktivierbar. Dabei ist der Klebstoff mit einer aufgeschrumpften Schrumpffolie verklebbar.

Unter einem Tubenrohling ist eine Tube zu verstehen, wie sie nach dem Herstellungsprozess, d.h. dem Formungsprozess vorliegt. Vor einer weiteren Verarbeitung erfolgt eine Reinigung bzw. Grundlackierung. Vorzugsweise wird ein Tubenrohling entweder mit der Grundlackierung bzw. nach der Grundlackierung mit dem geeigneten Klebstoff (wie vorstehend beschrieben) beschichtet. Ein derart vorbehandelter Tubenrohling trägt in der Regel keine weitere Beschriftung oder Kennzeichnung, wie sie für den Verkauf erforderlich ist. Der Vorteil einer Vorbeschichtung des Tubenrohlings liegt darin, dass das Aufbringen der dekortragenden Schicht unabhängig - sowohl räumlich wie zeitlich - von einer Lackierung bzw. Klebstoffbeschichtung ausgeführt werden kann. Dies erlaubt ein Schrumpfen und damit Verkleben der dekortragenden Schicht in Einrichtungen, die keine weitere technische Einrichtung zum Aufbringen der Klebstoffbeschichtung beinhaltet.

Ebenfalls ein weiterer Aspekt der Erfindung ist eine thermisch schrumpfbare Folie, die mit einem Klebstoff flächig vorbeschichtet ist, zur Herstellung einer erfindungsgemässen Tube mit einer dekortragenden. Der Klebstoff ist dabei in einem Temperaturbereich schmelzbar oder erweichbar und/oder thermisch aktivierbar, der dem Bereich der Schrumpftemperatur der Schrumpffolie entspricht.

Die Abstimmung des Bereiches der Schmelz- bzw. Erweichungsund/oder Aktivierungstemperatur mit der Schrumpftemperatur der Schrumpffolie erlaubt eine Vereinfachung des Dekorierungsvorgangs. Gleichzeitig wird den physikalischen und/oder chemischen Eigenschaften des Klebstoffes bzw. der Schrumpffolie Rechnung getragen und ein optimales Ergebnis für den Dekorierungsvorgang erzielbar.

Die Beschichtung der thermisch schrumpfbaren Folie mit einem geeigneten Klebstoff, wie er vorstehend beschrieben wurde, ermöglicht dem Anwender, die Folie auf den Behälter zu schrumpfen, ohne eine entsprechende Einrichtung zur Beschichtung der Folie mit dem Klebstoff zu benötigen. Der Dekorierungsvorgang ist einfacher und auch räumlich bzw. zeitlich getrennt von der Beschichtung mit dem Klebstoff ausführbar.

Die Erfindung wird im folgenden anhand eines Beispiels und den schematischen Figuren genauer erläutert. Es zeigen die :
- Figur 1:: Eine Ansicht eines Behälters mit verformbarer Behälterwand mit einer dekortragenden Schicht;
- Figur 2:: Eine Ansicht eines Behälters analog zu Figur 1 mit einem Verschluss mit Garantiefunktion;
- Figur 3:: Einen Querschnitt eines Behälters gemäss Figur 2;
- Figur 4:: Einen Behälterhals mit einer Abdeckscheibe; und
- Figur 5:: eine schematische Darstellung des Herstellungsverfahrens einer dekorierten Tube.

Ein Abschnitt einer thermisch schrumpfbaren Folie Thermodur SF-E746/01 (PET, Firma Klöckner Pentaplast) wird mit einem gewünschten Muster bedruckt und zu einem schlauchartigen Abschnitt zusammengefügt. Die zuvor mit einem Klarlack versehene Oberfläche eines Tubenrohlings wird mit einem flüssigen Gemisch aus Macromelt 6239 (Henkel KGaA) und n-Propanol in Form einer dünnen Schicht im µm-Bereich bedeckt.
Um den mit dem Schmelzklebstoff beschichteten Tubenrohling wird ein bedruckter Schlauchabschnitt platziert und beginnend von der Einfüllöffnung des Tubenrohlings wird der Schrumpfschlauch durch Warmluft in einem Temperaturbereich zwischen 80° und 100°C an die äussere Oberfläche des Tubenrohlings geschrumpft. Ein kontinuierliche Vorgehen erlaubt ein möglichst glattes Anpassen des Schlauchmaterials an den Tubenrohling.

Die Figuren sind schematische und unmassstäbliche Darstellungen eines erfindungsgemässen Behälters.

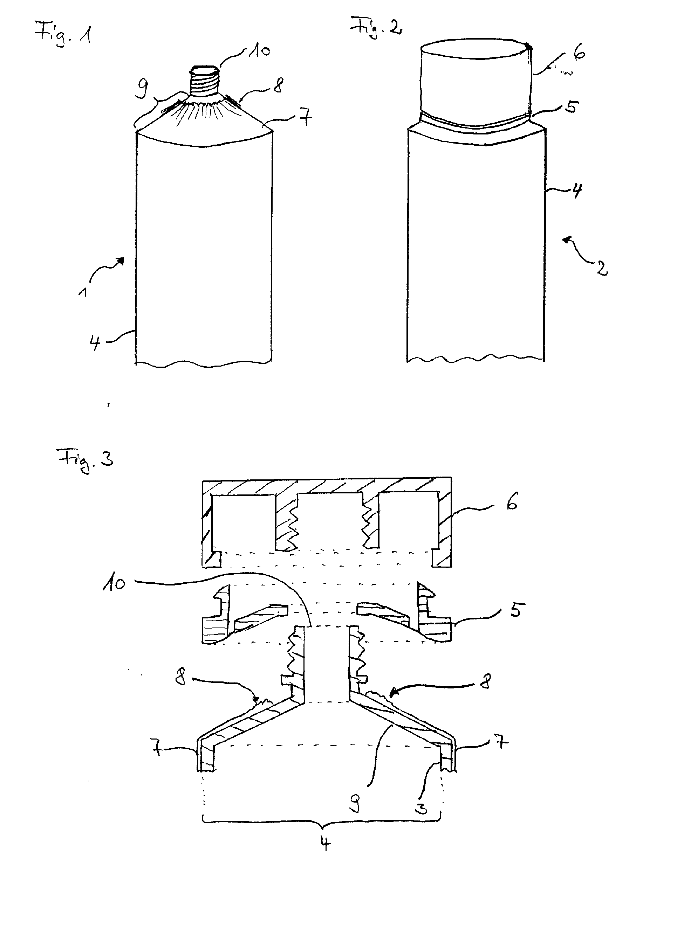

Figur 1 zeigt eine Tube 1 mit einer verformbaren Behälterwand. Die dekortragende Schicht 7 erstreckt sich über den Tubenkörper bis hin an den Tubenhals 9 mit der Ausgabeöffnung 10. In der unmittelbaren Nähe der Ausgabeöffnung 10 weist die dekortragende Schicht 7, d.h. die bedruckte Schrumpffolie, eine Anhäufung 8 der geschrumpften Folie auf, die durch den reduzierten Querschnitt des Tubenhalses 9 im Vergleich zum restlichen Tubenkörper 4 erzeugt wird.

Diese Anhäufung 8 wird bei einer verschlossenen Tube 2 vorzugsweise durch eine Verschlusskappe 6 überdeckt (Figur 2). Die Verschlusskappe 6 umfasst einen Garantiering 5, der dem Nutzer anzeigt, ob die Tube 2 bereits geöffnet wurde. Selbstverständlich können auch andere bekannte Ausführungen der Verschlusskappe bzw. des Garantieindikators eingesetzt werden. Die Verschlusskappe 6 sowie der Garantiering 5 erstrecken sich fast vollständig über den Tubenhals 9 und besitzt einen nur unwesentlich kleinen Durchmesser als der Tubenkörper 4.

Einen Längsschnitt im Bereich der Ausgabeöffnung 10 einer Tube 1 zeigt in einer Explosionsdarstellung Figur 3. Auf der Tubenwand 3 und teilweise auf dem Tubenhals 9 ist die Dekorfolie 7 aufgeschrumpft und aufgeklebt. Die Klebstoffschicht ist aufgrund ihrer sehr geringen Dicke (im µm-Bereich) nicht in der Figur gezeigt. Im Bereich der Ausgabeöffnung 10 ist deutlich die Folienanhäufung 8 erkennbar, die kein gleichmässiges Aussehen hat. Der Garantiering 5 weist Sollbruchstellen auf, so dass beim Abschrauben der Verschlusskappe 6 ein Teil des Garantierings 5 am Tubenkörper 4 verbleibt. Dieser ist so gewählt, dass er die Folienanhäufung 8 einer direkten Ansicht entzieht.

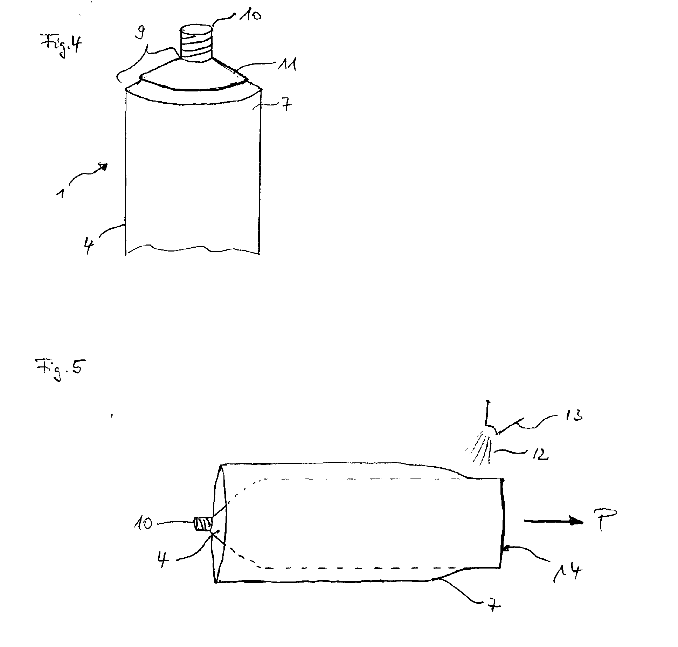

Die Folienanhäufung am Tubenhals 9 kann auch mit einem alternativen Mittel abgedeckt werden (Figur 4). Gemäss der Figur wird eine Abdeckscheibe 11 über die Ausgabeöffnung 10 gelegt und beispielsweise mit einem Klebstoff auf der geschrumpften Folie 7 fixiert. Damit kann der dekorierten Tube 1 neben dem Tubenkörper 4 auch im Halsbereich ein vermarktungstaugliches Aussehen gegeben werden.

Figur 5 zeigt einen beispielhaften Verfahrensschritt für die Herstellung einer dekorierten Tube. Die Dekorfolie 7 ist bereits an der Einfüllöffnung 14 bereits auf den Tubenkörper 4 geschrumpft und geklebt. Die heisse Luft 12, welche durch die Heissluftquelle 13 zugeführt wird, überstreicht die Dekorfolie 7 bzw. den Tubenkörper 4 während der kontinuierliche Führung des Tubenkörpers 4 in Bewegungsrichtung P. Damit kann die Luft im Zwischenraum von Dekorfolie 7 und Tubenkörper 4 kontrolliert entweichen und ein möglicher Einschluss von Luft wird vermieden. Die Dekorfolie 7 wird zuletzt an der Ausgabeöffnung 10 an den Tubenkörper 4 aufgeschrumpft und geklebt.

## Patentansprüche

1. Behälter (1) mit einer verformbaren Behälterwand (3), insbesondere eine Tube, mit einer dekortragenden Schicht (7),
**dadurch gekennzeichnet**,
a) dass die dekortragende Schicht (7) eine thermisch auf den Behälter geschrumpfte Folie aufweist;
b) dass die thermisch geschrumpfte Folie durch einen Klebstoff vorzugsweise flächig auf der Behälterwand (3, 9) fixiert ist.

2. Behälter (1) nach Anspruch 1, **dadurch gekennzeichnet, dass** der Klebstoff ein thermoplastischer Schmelzklebstoff ist.

3. Behälter (1) nach Anspruch 1 oder 2, **dadurch gekennzeichnet, dass** die thermisch aufgeschrumpfte Folie (7) vor dem Aufschrumpfen als Schlauch vorliegt.

4. Behälter (1) nach einem der Ansprüche 1 bis 3, wobei die thermisch schrumpfbare Folie anisotrop schrumpft.

5. Behälter (1) nach einem der Ansprüche 1 bis 4, wobei der Klebstoff ein thermisch aktivierbarer Klebstoff ist.

6. Behälter (1) nach einem der Ansprüche 1 bis 5, **dadurch gekennzeichnet, dass** der Klebstoff beim Erwärmen auf eine Temperatur zwischen 60° und 150°C, bevorzugt zwischen 80° und 130°C schmelzbar und beim oder nach dem Abkühlen aushärtbar ist.

7. Behälter (1) nach einem der Ansprüche 1 bis 6, wobei der Klebstoff vorzugsweise in Form einer Lösung oder Suspension auf den Behälter (1) aufgebracht ist.

8. Behälter (1) nach einem der Ansprüche 1 bis 7, wobei die thermisch schrumpfbare Folie bei einer Temperatur zwischen 25°C und 150°C schrumpfbar ist.

9. Behälter (1) nach einem der vorangehenden Ansprüche, **dadurch gekennzeichnet, dass** der Klebstoff bei der Schrumpf-Temperatur der schrumpfbaren Folie klebefähig und/oder aktivierbar ist.

10. Behälter (1) nach einem der vorangehenden Ansprüche, **dadurch gekennzeichnet, dass** die thermisch schrumpfbare Folie vollflächig auf die Behälterwand (3, 9) geklebt ist.

11. Behälter (1) nach einem der vorangehenden Ansprüche, **dadurch gekennzeichnet, dass** die geschrumpfte Folie im Bereich um die Ausgabeöffnung (10) durch eine Abdeckscheibe (11) abgedeckt ist.

12. Behälter (1) nach einem der vorangehenden Ansprüche, **dadurch gekennzeichnet, dass** die geschrumpfte Folie im Bereich um die Ausgabeöffnung (10) durch eine Verschlusskappe (6), insbesondere eine Verschlusskappe (6) mit einer Garantiefunktion (5) abgedeckt ist

13. Verfahren zur Dekoration eines verformbaren Behälters (1), insbesondere einer Tube, umfassend die Schritte:
- Bereitstellen eines verformbaren Behälters (1);
- Bereitstellen eines thermisch schrumpfbaren Materials, vorzugsweise einer thermisch schrumpfbaren Folie;
- Bereitstellen eines Klebstoffes zum Aufkleben des geschrumpften Materials auf die Aussenfläche (3, 9) des verformbaren Behälters (1) ;
- kontinuierliches Aufschrumpfen des thermisch schrumpfbaren Materials auf den verformbaren Behälter (1) unter Wärmezufuhr;
wobei der Klebstoff eine dauerhafte Adhesion des thermisch geschrumpften Materials am verformbaren Behälter (1) bewirkt.

14. Verfahren nach Anspruch 13, wobei der verformbare Behälter (1) aus irreversibel verformbarem Material, insbesondere aus Aluminium, Aluminium-Legierungen oder einem Laminat-Werkstoff besteht.

15. Verfahren nach Anspruch 13 oder 14, wobei das thermisch schrumpfbare Material eine Bedruckung aufweist.

16. Verfahren nach einem der Ansprüche 13 bis 15, wobei das thermisch schrumpfbare Material aus einem bandartigen Material zu einem Schlauch zusammengefügt ist.

17. Verfahren nach einem der Ansprüche 13 bis 16, wobei das thermisch schrumpfbare Material aus PET, Hart-PVC oder orientiertem Polystyrol besteht.

18. Verfahren nach einem der Ansprüche 13 bis 17, wobei der Klebstoff in Form einer Lösung oder Suspension auf den verformbaren Behälter aufgebracht wird.

19. Verfahren nach einem der Ansprüche 13 bis 18, wobei das Aufschrumpfen bei einer Temperatur zwischen 60°C und 150°C erfolgt.

20. Verfahren nach einem der Ansprüche 13 bis 19, wobei der Klebstoff ein thermoplastischer und/oder thermisch aktivierbarer Klebstoff ist.

21. Verfahren nach einem der Ansprüche 13 bis 20, wobei das geschrumpfte Material, insbesondere die Folie am Halsbereich (9) des verformbaren Behälter (1) mit einer Abdeckscheibe (11) überdeckt wird.

22. Verfahren nach einem der Ansprüche 13 bis 20, wobei das geschrumpfte Material, insbesondere die Folie am Halsbereich (9) des verformbaren Behälter (1) mit einer Verschlusskappe (6), insbesondere mit einer Verschlusskappe (6) mit Garantiefunktion (5) überdeckt wird.

23. Verwendung einer thermisch schrumpfbaren Folie zur Dekoration eines verformbaren Behälters (1) unter Anwendung eines bei Erwärmung der Folie auf Schrumpftemperatur klebfähigen Klebstoffs.

24. Verwendung einer Schrumpffolie als dauerhafte aufgeschrumpfte und zusätzlich verklebte Dekorationsschicht (7) auf einer Tube (1) mit deformierbarer Tubenwand (3).

25. Mit einem Klebstoff flächig vorbeschichteter Tuben-Rohling, wobei der Klebstoff bei Zufuhr von Wärme schmilzt und/oder thermisch aktivierbar und mit einer aufgeschrumpften Schrumpffolie verklebbar ist, zur Herstellung einer Tube (1) nach einem der Ansprüche 1 bis 22.

26. Mit einem Klebstoff flächig vorbeschichtete Schrumpffolie, wobei der Klebstoff in einem Temperaturbereich schmelzbar oder thermisch aktivierbar ist und wobei dieser Temperaturbereich dem Bereich der Schrumpftemperatur der Schrumpffolie entspricht, zur Herstellung einer Tube nach einem der Ansprüche 1 bis 22.
